## Europäisches Patentamt
## European Patent Office
## Office européen des brevets

(11) Veröffentlichungsnummer: **0 385 126**
**A2**

(12) # EUROPÄISCHE PATENTANMELDUNG

(21) Anmeldenummer: **90102127.9**

(51) Int. Cl.5: **H04B 3/46, H04B 17/02**

(22) Anmeldetag: **02.02.90**

(30) Priorität: **28.02.89 DE 3906289**

(43) Veröffentlichungstag der Anmeldung:
**05.09.90 Patentblatt 90/36**

(84) Benannte Vertragsstaaten:
**AT BE CH DE FR GB IT LI NL SE**

(71) Anmelder: **Siemens Aktiengesellschaft**
**Wittelsbacherplatz 2**
**D-8000 München 2(DE)**

(72) Erfinder: **Narjes, Ferdinand, Ing.-Grad.**
**Tölzerstrasse 41**
**D-8000 München 70(DE)**
Erfinder: **Weimert, Günter, Dipl.-Ing.**
**Geisenbrunnerstrasse 64**
**D-8000 München 71(DE)**

(54) **Einrichtung zur In-Betrieb-Überwachung und/oder Steuerung von Übertragungseinrichtungen der elektrischen Nachrichten-übertragungstechnik.**

(57) Einrichtung zur In-Betrieb-Überwachung und/oder Steuerung von Übertragungseinrichtungen der elektrischen Nachrichtenübertragungstechnik, bei der mit Adressen versehene Prozessoreinheiten über ein Telegrammübertragungsnetz Informationen miteinander austauschen, wobei eine als Master eingestellte Prozessoreinheit eine Adressierung der weiteren Prozessoreinheiten steuert. Für den Fall, daß irrtümlich zwei Prozessoreinheiten als Master eingestellt sind, ist vorgesehen, daß eine als Master eingestellte Prozessoreinheit gegebenenfalls in den Modus eines Slave umschaltet und ihren Status meldet.

# FIG 2

EP 0 385 126 A2

Die Erfindung bezieht sich auf eine wie im Oberbegriff des Patentanspruchs 1 angegebene Einrichtung zur In-Betrieb-Überwachung und/oder Steuerung von Übertragungseinrichtungen der elektrischen Nachrichtenübertragungstechnik.

Die Prozessoreinheiten dienen zum Austausch von Informationen über das Telegrammübertragungsnetz. Eine der Prozessoreinheiten ist als zentrale Aufrufeinheit eingestellt, die die weiteren Prozessoreinheiten mit Hilfe von Aufruftelegrammen zur Aussendung von Meldungstelegrammen an die Aufrufeinheit veranlaßt.

Ein Verfahren zur In-Betrieb-Überwachung einer Nachrichtenübertragungseinrichtung, bei der Nutzsignale über eine elektrooptische Übertragungsstrecke und Telemetriesignale über einen Hilfskanal übertragen werden, ist bereits aus Ewald Braun und Erhard Steiner: "Überwachung und zusätzliche Dienste der Digitalübertragungsysteme für Lichtwellenleiter" telcom report 10 (1987) Spezial "Multiplex- und Leitungseinrichtungen", Seite 109 bis 114 bekannt. Das bekannte Verfahren verwendet adressenfreie Telemetrietelegramme, so daß die in den Leitungsendgeräten und Zwischenregeneratoren eines Übertragungsabschnittes vorgesehenen Prozessoreinheiten nicht adressiert zu werden brauchen.

Man kann andererseits vorsehen, daß die Prozessoreinheiten mit Hilfe eines Adressierverfahrens durch eine Adressiervorrichtung selbsttätig adressiert werden. Lassen sich dabei die Prozessoreinheiten wahlweise auf einen Master mit der Funktion einer Adressiervorrichtung oder auf einen Slave einstellen, so er gibt sich das Problem, daß irrtümlich mehr als eine Prozessoreinheit als Master eingestellt sein kann.

Aufgabe der Erfindung ist es, eine Einrichtung zur In-Betrieb-Überwachung und/oder Steuerung von Übertragungseinrichtungen der elektrischen Nachrichtenübertragungstechnik derart auszubilden, daß eine irrtümliche Einstellung zweier Prozessoreinheiten als Master die Funktion der Einrichtung möglichst wenig beeinträchtigt. Insbesondere soll es dabei möglich sein, Geräte mit Prozessoreinheiten für eine In-Betrieb-Überwachung von Nachrichten-, vorzugsweise Digitalsignal-Übertragungsstrecken möglichst störungsfrei zu adressieren.

Gemäß der Erfindung wird die Einrichtung zur Lösung dieser Aufgabe in der im kennzeichnenden Teil des Patentanspruchs 1 angegebenen Weise ausgebildet.

Vorteilhafte Weiterbildungen der Erfindung gehen aus den Unteransprüchen hervor.

Bei der Weiterbildung nach Anspruch 8 sendet die als Slave eingestellte Prozessoreinheit das Befehlstelegramm, mit dem sie den Master zum Start der Adressierung auffordert, in mehreren Richtungen zu unterschiedlichen Zeiten aus. Diese Maßnahme setzt nicht voraus, daß sich die Prozessoreinheiten wahlweise als Master oder als Slave einstellen lassen. Sie ist vielmehr auch dann von Vorteil, wenn in einer Einrichtung zur In-Betrieb-Überwachung an verschiedenen Orten, insbesondere in Leitungsendgeräten, als Master ausgebildete Ortungsmodule wahlweise einsetzbar sind und damit die Gefahr besteht, daß in einem Ortungsbereich mehr als ein Ortungsmodul vorhanden ist.

Ein weiter verbesserter Schutz gegen einen irrtumsbedingten gleichzeitigen Betrieb zweier Master läßt sich dadurch erzielen, daß eine als Master eingestellte Prozessoreinheit erst nach einer durch einen Quasizufallsgenerator oder einen Staffelzeitgeber bestimmten Zeitspanne auf ein Befehlstelegramm, mit dem sie zum Start der Adressierung aufgefordert wird, reagiert.

Die Maßnahmen nach Anspruch 9 haben den Vorteil, daß an den Stellen der Einrichtung zur In-Betrieb-Überwachung, für die von vornherein kein Master infrage kommt, eine Einstellung als Master sicher verhindert wird. Dabei kann in einer Aufnahmevorrichtung ein Codierschalter vorgesehen sein, der eine Voreinstellung auf den Slave-Modus festlegt oder die Einstellmöglichkeit der Prozessoreinheit bestehen läßt. Eine andere vorteilhafte Lösung sieht eine Brücke an einem Steckverbinder vor, die einen entsprechenden Steueranschluß z.B. mit Bezugspotential verbindet.

Ferner kann es zweckmäßig sein, an den Stellen der Einrichtung zur In-Betrieb-Überwachung, für die von vornherein kein Ortungsmodul infrage kommt, das Einsetzen eines Ortungsmoduls durch eine mechanische Sperre zu verhindern.

Die Erfindung wird anhand der in den Figuren dargestellten Ausführungsbeispielen näher erläutert.

Es zeigen

Fig. 1 einen Digitalsignal-Grundleitungsabschnitt mit Ortungsmodulen und Personalcomputer und

Fig. 2 einen Leitungsabschnitt mit zwei Leitungsendgeräten und mehreren Zwischenregeneratoren

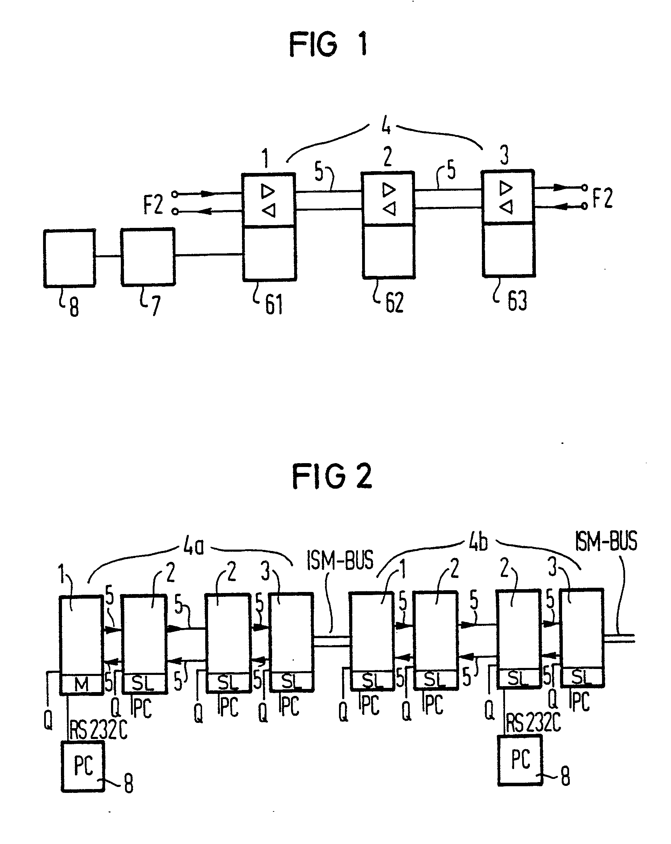

Leitungsendgeräte 1 und 3, gegebenenfalls ein oder mehrere Zwischenregeneratoren 2 und der Lichtwellenleiter 5 sind die Grundelemente der in Figur 1 gezeigten Digitalsignal-Übertragungsstrecke. Die Funktionsfähigkeit und Übertragungeigenschaften dieser Übertragungsstrecke werden mit Hilfe von Geräten der In-Betriebüberwachung, gebildet durch den Ortungsmodul 7, den Personalcomputer 8 und die In-Betrieb-Überwachungs-Prozessoreinheit 61, 62 bzw. 63 im folgenden als Prozessoreinheit bezeichnet, kontrolliert.

Das Ortungsmodul kann entfallen, wenn die Prozessoreinheiten 61, 62 bzw. 63 ausgeführt werden, daß sie als Master oder als Slave geschaltet werden können. Dann muß eine Prozessoreinheit als Master geschaltet werden und die Aufgaben des Ortungsmoduls übernehmen und die restlichen Prozessoreinheiten müssen als Slave geschaltet werden.

Die kleinste Einheit einer Digitalsignal-Übertragungsstrecke ist ein Digitalsignal-Grundleitungsabschnitt 4, im folgenden als Leitungsabschnitt 4 bezeichnet. Dieser Leitungsabschnitt besteht aus den beiden Leitungsendgeräten 1 und 3 und bei Bedarf in die Strecke eingefügten Zwischenregeneratoren 2. Die Digitalsignal-Übertragungsstrecke gehört insbesondere einer Übertragungseinrichtung der synchronen digitalen Hierarchie an. In diesem Fall sind die Leitungsendgeräte synchrone Leitungsmultiplexer und die Zwischenregeneratoren synchrone Leitungsregeneratoren. Der Telemetriekanal ist in diesem Fall einer der einer nationalen Benutzung vorbehaltenen Kanäle des sogenannten Overheads.

In jedes Leitungsendgerät 1 bzw. 3 und in jeden Zwischenregenerator 2 ist eine Prozessoreinheit eingesetzt, die über einen internen Bus die Überwachungsdaten von dem zu überwachenden Hauptsystem erhält.

Die Überwachungsdaten werden über ein Telegrammübertragungsnetz zum Ortungsmodul übertragen. Dieses Telegrammübertragungsnetz kann je nach Struktur des Hauptnetzes im Ortungsbereich und je nach Anforderungen insbesondere aus einer Linie mit einem oder mehreren in Kaskade geschalteten Leitungsabschnitten 4, einem Netz mit parallelen Linien oder einem mit Abzweigungen versehenen Sternnetz bestehen.

Gegebenenfalls können über den ISM-Bus Überwachungsdaten zwischen einem Zwischenregenerator und einem abzweigenden Leitungsabschnitt ausgetauscht werden.

Innerhalb eines Leitungsabschnittes 4 werden die Überwachungsdaten der Leitungsendgeräte 1, 3 und der Zwischenregeneratoren 2 von einer Prozessoreinheit zur nächsten Prozessoreinheit z. B. von der Prozessoreinheit 61 zur Prozessoreinheit 62 bzw. umgekehrt jeweils über den Telemetriekanal übertragen.

Innerhalb einer Linie werden die Überwachungsdaten von Leitungsendgerät 1 bzw. 3 zu Leitungsendgerät 3 bzw. 1 gegebenenfalls von einem Leitungsabschnitt zum nächsten Leitungsabschnitt, z. B. vom Leitungsabschnitt 4a zum Leitungsabschnitt 4b oder vom Leitungsabschnitt 4b zum Leitungsabschnitt 4a jeweils über den ISM-Bus der betreffenden Prozessoreinheit übertragen.

Das Überwachungsverfahren ermöglicht es, in einer beidseitig mit einem Leitungsendgerät 1, 3 abgeschlossenen Grundleitung während des Betriebs die Leitungsendgeräte 1, 3 und Zwischenregeneratoren 2 zu überwachen und im Fehlerfall das gestörte Regeneratorfeld einzugrenzen.

Das In-Betrieb-Überwachungsverfahren (In-Service-Monitoring, ISM) arbeitet nach dem Pollingprinzip. Die Abfrage der einzelnen Geräte wird im Regelfall zentral von einem bezüglich ISM-Einrichtung als Master geschalteten Leitungsendgerät 1, 3 gesteuert, das sich an einem Ende des Ortungsbereichs befindet.

Die Vergabe der Adressen an die einzelnen Geräte erfolgt nach einem automatischen Verfahren.

Die Verbindung zwischen den Leitungsabschnitten 4 erfolgt über einen bidirektionalen Datenbus (ISM-Bus).

Die Abfrage der Überwachungsdaten und gezielte Eingriffe in den Pollingablauf zur Unterstützung der Fehlerortung sind an jedem Leitungsendgerät 1, 3 bzw. Zwischenregenerator 2 durch Anschluß eines Personalcomputers 8 (PC) möglich. Bei Anschluß eines Personalcomputers 8 können die Überwachungsdaten des gesamten Ortungsbereichs ausgewertet und an dessen Bildschirm dargestellt werden.

Über die Schnittstelle Q an dem als Master geschalteten Leitungsendgerät ist die Abfrage von Daten und das Absetzen von Steuerbefehlen in Verbindung mit einem Signalsammelsystem möglich.

Ein Leitungsendgerät 1 wird mit Hilfe eines Kodierschalters oder - über einen an das Gerät angeschlossenen Personalcomputer 8 - per Steuerbefehl als Master oder Slave eingestellt.

Der Master fragt zentral die zu überwachenden Geräte - Zwischenregeneratoren 2 und Leitungsendgeräte 1, 3 - zyklisch mit ihrer Adresse durch Aussenden eines Aufruftelegramms ab. Innerhalb dieses Zyklus ruft er auch die eigene Station auf und sendet anschließend wie ein Slave die Daten seiner Station aus. Er empfängt die von den aufgerufenen Geräten gesendeten Antworttelegramme, vergleicht die eingehenden Daten mit eingegebenen Schwellwerten und löst bei Überschreiten der Schwellwerte Alarme aus.

Stellt der Master während des Pollzyklus fest, daß er von einem Gerät innerhalb einer Wartezeit von z. B. 0,2 Sekunden nach dem Aufruf keine Antwort empfängt, so setzt er den Pollzyklus mit dem nächsten Gerät fort.

Nach einem Pollzyklus gibt der Master mit einem Telegramm an alle Geräte ein Zeitintervall von z. B. mindestens 0,2 Sekunden frei, in dem der Befehl für eine Neuadressierung abgesetzt werden kann. Meldet sich ein Gerät mit diesem Befehl, so findet die nachstehend beschriebene Adressierung statt. Andernfalls wird der normale Pollzyklus fortgesetzt.

Die minimale Zykluszeit einschließlich des freigegebenen Zeitintervalls nach einem Pollzyklus beträgt z. B. 1,2 Sekunden.

Im Normalbetrieb werden alle an einem Gerät ankommenden Aufruftelegramme und Antworttelegramme direkt zu den Ausgängen durchgeschaltet, um die Zeit für einen Pollzyklus möglichst kurz zu halten.

In einem Speicherbetrieb werden alle ankommenden Telegramme der betroffenen Übertragungseinrichtung in dem Gerät zwischengespeichert, auf Fehler untersucht und nur fehlerfreie Telegramme zu den Ausgängen durchgeschaltet. Die Übertragungsmodi Normalbetrieb und Speicherbetrieb können vom Master aus per Steuerbefehl im Aufruftelegramm in jedem Gerät - getrennt für die beiden Übertragungseinrichtungen - umgeschaltet werden.

Es sind zwei Adressierverfahren der Geräte in einem Ortungsabschnitt möglich, und zwar eine manuelle Adressierung eines Gerätes im Ortungsbereich und eine automatische Adressierung aller Geräte im Ortungsbereich.

Die ISM-Adressen der Leitungsendgeräte 1, 3 und Zwischenregeneratoren 2 setzen sich aus zwei mal acht Bits zusammen, 8 Bits für die Nummer des Leitungsabschnittes 4, in dem das Gerät eingesetzt ist - im folgenden L-Adresse genannt -, und 8 Bits für die Nummer des Gerätes innerhalb eines Leitungsabschnittes 4 -im folgenden G-Adresse genannt-.

Die Telegramme enthalten in einem ersten Adreßbyte die Nummer der L-Adresse und in einem zweiten Adreßbyte die Nummer der G-Adresse.

Die Nummer der L-Adresse und die Nummer der G-Adresse werden bei der Adressierung eines Ortungsbereichs einheitlich - vom Master aus gesehen - den Geräten in aufsteigender Reihenfolge als Adressen zugeordnet.

Alle Adressen werden in dezimaler Form angegeben und sind im Telegramm binär codiert.

Zur manuellen Adreßzuweisung wird einem Gerät, das keine Adressen eingespeichert hat, von einem Personalcomputer 8 aus, der über die PC-Schnittstelle an das Gerät angeschlossen ist, per Befehlstelegramm eine L-Adresse und G-Adresse zugeordnet.

Bei der automatischen Adreßzuweisung sind die Geräte eines Ortungsabschnittes nach Inbetriebnahme im Speicherbetrieb. Wird nur die Teilstrecke in Betrieb genommen, so ist nicht auszuschließen, daß Geräte anderer Teilstrecken im Normalbetrieb sind. Deshalb werden vor der automatischen Adressierung per Befehlstelegramm alle Geräte in den Speicherbetrieb geschaltet. Der Befehl zur automatischen Adressierung aller Geräte eines Ortungsbereichs kann über die Tastatur eines Personalcomputers 8, der über die PC-Schnittstelle an einem der Geräte (Master oder Slave) angeschlossen ist oder von einem Anzeige- und Bedienmodul aus abgegeben werden.

Die automatische Adressierung mit Adressierstart vom Master wird durch Eingabe über die Tastatur eines am Master angeschlossenen Personalcomputers 8 gestartet. Über die PC-Schnittstelle sendet der Personalcomputer 8 daraufhin ein Befehlstelegramm an den Master mit dem Befehl "Start Adressierung".

Der Master sendet ein Befehlstelegramm
- mit der Adresse 255 in den ersten beiden Adreßbytes (Aufruf an alle Geräte) und
- mit dem Befehl "Gehe in den Speicherbetrieb"
zu allen Slaves der Strecke.

Danach beginnt der Master die Adressierung mit dem Aussenden eines weiteren Befehlstelegramms mit dem Adressierbefehl.

Dieses Befehlstelegramm mit der Adresse 255 in den ersten beiden Adreßbytes und der eigenen L- und G-Adresse in den beiden weiteren Adreßbytes wird zum nächsten Slave gesendet.

Die Zwischenregeneratoren 2 innerhalb eines Leitungsabschnitts 4 und das Leitungsendgerät 3 am Ende - vom Master aus gesehen -eines Leitungsabschnitts 4 erhalten das Befehlsdiagramm mit dem Adressierbefehl über den Telemetriekanal. Sie übernehmen folgendes in ihren Adreßspeicher:
- den Adreßvorschlag im dritten Adreßbyte als eigene L-Adresse und
- dem um Eins erhöhten Adreßvorschlag im vierten Adreßbyte als eigene G-Adresse.

Anschließend setzen sie in das dritte und vierte Adreßbyte des empfangenen Befehlstelegramms den Inhalt des eigenen Adreßspeichers ein und senden das geänderte Befehlstelegramm über den unidirektionalen Telemetriekanal des Zwischengenerators 2 bzw. den bidirektionalen ISM-Bus des Leitungsendgeräts 3 zum nächsten Gerät.

Die Leitungsendgeräte 1 am Anfang - vom Master aus gesehen -des zweiten und jedes weiteren Leitungsabschnitts 4 erhalten das Befehlstelegramm mit dem Adressierbefehl über den bidirektionalen ISM-Bus. Sie übernehmen den um Eins erhöhten Adreßvorschlag im dritten Adreßbyte als eigene L-Adresse und das mit der Adresse von z. B. 001 überschriebene vierte Adreßbyte als eigene G-Adresse in ihren Adreßspeicher.

Anschließend setzen sie in das dritte und vierte Adreßbyte des empfangenen Befehlstelegramms den Inhalt des eigenen Adreßspeichers ein und senden das geänderte Befehlstelegramm über den Telemetriekanal zum nächsten Gerät.
Dieser Vorgang wird fortgesetzt, bis alle Geräte des Ortungsbereichs adressiert sind.

Damit ist die Adressierphase der Geräte abgeschlossen. Danach beginnt der Master den ersten Pollzyklus und schaltet dabei die Geräte in den Normalbetrieb um.

Um zwei Master innerhalb eines Ortungsbereichs erkennen zu können, beginnt ein Master nur dann mit der Adressierung, wenn er ein Telegramm mit dem Befehl "Start Adressierung" entweder von dem an ihn angeschlossenen Personalcomputer 8, von seinem Anzeige- und Bedienmodul oder über den Telemetriekanal von einem Slave erhält.

Empfängt ein als Master eingestelltes Gerät ein Telegramm mit dem Befehl "Start Adressierung" über den ISM-Bus oder ein Telegramm mit Adressierbefehl von einem anderen Master oder ein Befehlstelegramm von einem anderen Master, so schaltet er in den Modus eines Slaves um und kann dann wie nachstehend angegeben adressiert werden. Zusätzlich meldet er nach der Adressierung bei späteren Aufrufen in den Informationsbytes der Antworttelegramme, daß er als Master eingestellt ist, aber im Slave-Modus arbeitet.

Die automatische Adressierung kann auch von einem Slave aus durch Eingabe über die Tastatur eines an diesem Slave angeschlossenen Personalcomputers 8 oder eines Anzeige- und Bedienmoduls gestartet werden. Der Personalcomputer 8 sendet ein Befehlstelegramm an den Slave mit dem Befehl "Start Adressierung". Der Slave sendet danach in dem hierfür vorgesehenen Zeitintervall nach einem Pollzyklus oder, wenn er innerhalb einer Wartezeit von 15 Sekunden kein Aufruftelegramm empfängt, ein Befehlstelegramm mit dem Befehl "Start Adressierung" an den Master. Dieses Befehlstelegramm wird mit einem Zeitunterschied von z. B. 0,1 Sekunden beim Zwischengenerator in die beiden Richtungen über den Telemetriekanal, beim Leitungsendgerät in den Telemetriekanal und den ISM-Bus gesendet. Anschließend führt der Master - wie beschrieben - die Adressierung der Strecke durch.

**Ansprüche**

1. Einrichtung zur In-Betrieb-Überwachung und/oder Steuerung von Übertragungseinrichtungen der elektrischen Nachrichtenübertragungstechnik, bei der mit Adressen versehene Prozessoreinheiten über ein Telegrammübertragungsnetz derart Informationen miteinander austauschen können, daß Abfragetelegramme einer als Master eingestellte Prozessoreinheit und Antworttelegramme von als Slaves eingestellten Prozessoreinheiten übertragen werden, wobei der Master in einer Adressierungsphase an die Prozessoreinheiten Adressiertelegramme aussendet und die Slaves veranlaßt, jeweils eine individuelle Adresse anzunehmen,
**dadurch gekennzeichnet,**
daß die Prozessoreinheiten derart ausgebildet sind, daß eine als Master eingestellte Prozessoreinheit bei Empfang von Telegrammen eines weiteren Masters in den Modus eines Slave umschaltet, sich als solcher adressieren läßt und bei späteren Aufrufen in seinen Antworttelegrammen mittels einer Statusinformation meldet, daß er als Master eingestellt ist, aber im Slave-Modus arbeitet.

2. Einrichtung nach Anspruch 1,
**dadurch gekennzeichnet,**
daß die Statusinformation, mit der eine als Master eingestellte und im Slavemodus arbeitende Prozessoreinheit ihren Status meldet, in Informationsbytes der Antworttelegramme enthalten ist.

3. Einrichtung nach Anspruch 1 oder 2,
**dadurch gekennzeichnet,**
daß in einer Nachrichtenübertragungseinrichtung, bei der die Prozessoreinheiten innerhalb ein und desselben Leitungsabschnittes über einen Telemetriekanal und zwischen verschiedenen Leitungsabschnitten über einen In-Betrieb-Überwachungsbus Informationen austauschen, die Prozessoreinheiten derart ausgebildet sind, daß eine als Master eingestellte Prozessoreinheit nur durch aus dem eigenen Leitungsabschnitt stammende Startbefehle zum Start der Adressierung veranlaßbar ist.

4. Einrichtung nach Anspruch 3,
**dadurch gekennzeichnet,**
daß die Prozessoreinheiten derart ausgebildet sind, daß sie bei einer Einstellung als Master und Empfang eines Startbefehles über einen In-Betrieb-Überwachungsbus in den Modus eines Slaves umschalten.

5. Einrichtung nach Anspruch 3,
**dadurch gekennzeichnet,**
daß eine als Master eingestellte Prozessoreinheit durch einen an sie angeschlossenen Personalcomputer zum Start der Adressierung veranlaßbar ist.

6. Einrichtung nach Anspruch 3,
**dadurch gekennzeichnet,**
daß eine als Master eingestellte Prozessoreinheit durch ein an sie angeschlossenes Bedien- und Anzeigenmodul zum Start der Adressierung veranlaßbar ist.

7. Einrichtung nach Anspruch 3,
**dadurch gekennzeichnet,**
daß eine als Master eingestellte Prozessoreinheit über den Telemetriekanal von einer als Slave eingestellten Prozessoreinheit zum Start der Adressierung veranlaßbar ist.

8. Einrichtung, insbesondere nach Anspruch 7,
**dadurch gekennzeichnet,**
daß die als Slave eingestellte Prozessoreinheit das Befehlstelegramm, mit dem sie den Master zum Start der Adressierung auffordert, in mehreren Richtungen zu unterschiedlichen Zeiten aussendet.

9. Einrichtung nach einem der vorhergehenden Ansprüche,
**dadurch gekennzeichnet,**
daß an Orten, an denen nur als Slave eingestellte Prozessoreinheiten vorgesehen sind, insbesondere in Zwischenregeneratoren, Einstellmittel angeordnet sind, die eine als Master eingestellte Prozessoreinheit bei ihrer Inbetriebnahme in den Slave-Modus überführen.

10. Einrichtung nach einem der Ansprüche 1 bis 9,

**dadurch gekennzeichnet,**

daß die Prozessoreinheiten Endstellen und/oder Zwischenregeneratoren einer Digitalsignal-Übertragungseinrichtung zugeordnet sind.

# FIG 1

# FIG 2